# EUROPEAN PATENT APPLICATION

(11) **EP 2 100 758 A1**
(43) Date of publication of application: **16.09.2009**
(21) Application number: 08425155.2
(22) Date of filing: 12.03.2008
(51) Int. Cl.: B60H 1/00

(54) **Air-treatment assembly for vehicles**

(71) Applicant: DENSO THERMAL SYSTEMS S.p.A., 10046 Poirino (Torino) (IT)
(72) Inventor: Gataleta, Raffaele c/o Denso Thermal Systems S.p.A., 10046 Poirino (Torino) (IT)
(74) Representative: Marchitelli, Mauro

(57) **Abstract**

An air-treatment assembly for vehicles, comprising:
- a casing (12) having an air-intake opening (14) for taking in air from outside the vehicle and an air-intake opening (16) for taking in air from inside the vehicle;
- an air-intake flap (18), which is movable with respect to the casing (12) between a closed position of the opening (14) for taking in air from outside and a closed position of the opening (16) for taking in air from inside;
- a fan assembly (20);
- at least one radiator (28, 30) for heating/cooling of a flow of air;
- at least one air-distribution flap (40, 42) for opening or closing a duct (36, 38) for distribution of the air flow;
- at least one sensor (44, 48), for detecting a characteristic data of the air flow, which is set on said air-intake flap (18) and/or on said air-distribution flap (40, 42); and
- a control unit, designed to vary the position of said air-intake flap (18) and/or of said air-distribution flap (40, 42) as a function of said characteristic data of the air flow.

## Description

The present invention relates to an air-treatment assembly for vehicles, comprising:
- a casing having an air-intake opening for taking in air from outside the vehicle and an air-intake opening for taking in air from inside the vehicle;
- an air-intake flap that is movable with respect to the casing between a closed position of the opening for taking in air from outside and a closed position of the opening for taking in air from inside;
- a fan assembly;
- at least one radiator for heating/cooling a flow of air;
- at least one air-distribution flap for opening and closing a duct for distribution of the air flow;
- at least one sensor, designed to detect a characteristic data of the air flow; and
- a control unit, designed to vary the position of said air-intake flap and/or of said air-distribution flap as a function of said characteristic data of the air flow.

In air-treatment assemblies of the type referred to above, said sensor element can be a sensor for detecting the quality of the air or a temperature sensor. The sensor for detecting the quality of the air has the function of detecting the presence of pollutants in the flow of air coming from outside the vehicle. When an amount of pollutants higher than a pre-set threshold is detected, the electronic control unit governs, via actuators, the displacement of the air-intake flap towards the closed position of the opening for taking in air from outside.

The assembly can also be equipped with a temperature sensor for measuring the temperature of the air flow downstream of the radiator for heating/cooling the air. The electronic control unit governs, via actuators, the movement of at least one air-distribution flap and at least one air-mixing flap as a function of the signals supplied by the temperature sensor.

In traditional solutions, the sensor for detecting the quality of the air and the temperature sensor are fixed on the casing of the assembly.

The object of the present invention is to provide an air-treatment assembly that will render installation of said sensors on the vehicle simpler and less expensive.

According to the present invention, said object is achieved thanks to the fact that at least one of said sensors is set on said air-intake flap and/or on said air-distribution flap.

The positioning of the sensor for detecting the quality of the air and/or of the temperature sensor directly on the respective flap (on the air-intake flap in the case of the sensor for detecting the quality of the air and on the air-distribution flap in the case of the temperature sensor) enables measurement of the respective characteristic data of the air flow in any position of the respective flap. This arrangement simplifies installation of the sensors and enables greater freedom in the design of more compact assemblies.

Further characteristics and advantages of the present invention will emerge clearly in the course of the ensuing detailed description, which is provided purely by way of non-limiting example, with reference to the annexed drawing, wherein:
- Figures 1 and 2 are schematic cross sections illustrating an air-treatment assembly according to the present invention with the air-intake flap, respectively, in the closed position of the opening for taking in air from outside and in the closed position of the opening for taking in air from inside; and
- Figures 3 and 4 are schematic cross sections of the assembly according to the invention illustrating an air-distribution flap in the closed position and in the open position, respectively.

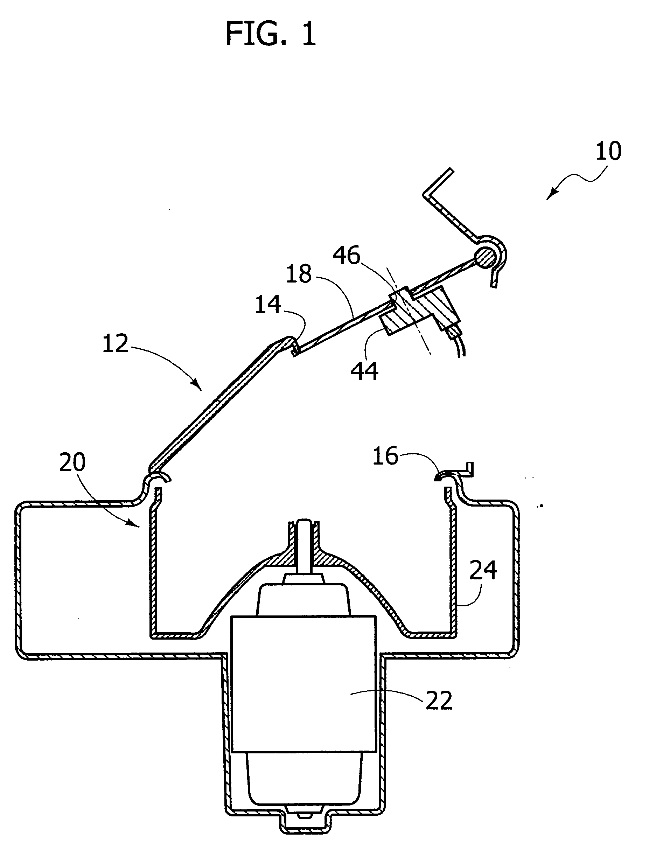

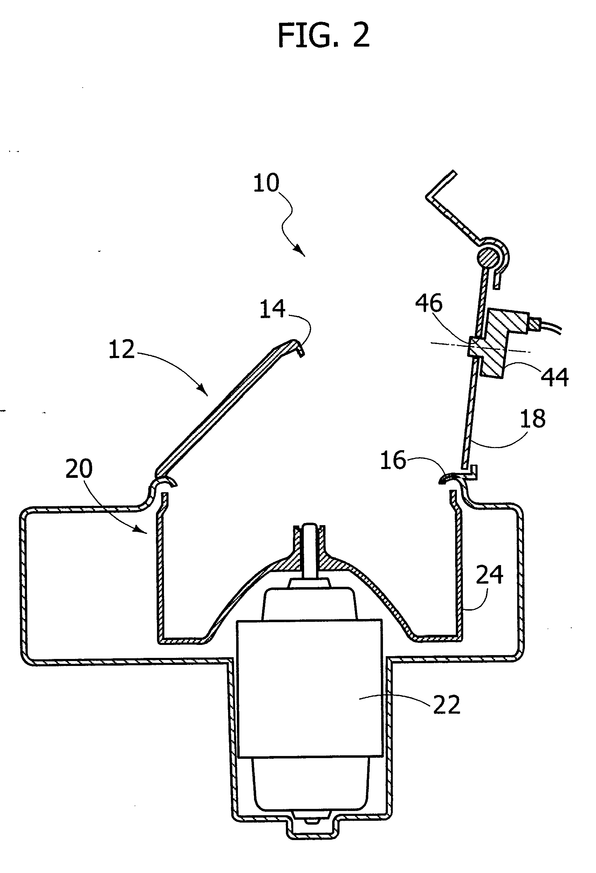

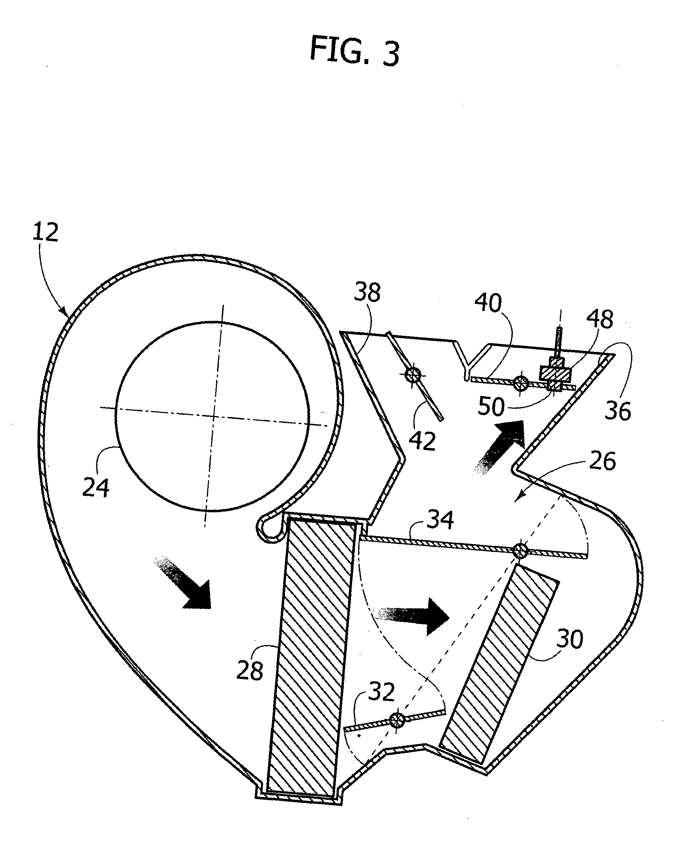

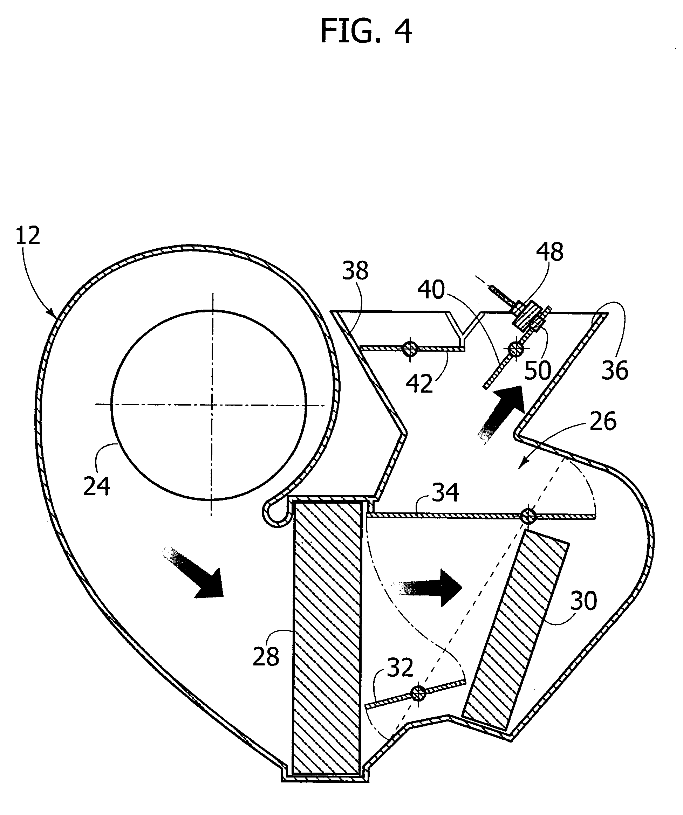

With reference to Figures 1 and 2, designated by 10 is an air-treatment assembly for vehicles according to the present invention. The assembly 10 comprises a casing 12 having an opening 14 for taking in air from outside the vehicle and an opening 16 for taking in air from inside the vehicle. An air-intake flap 18 is articulated to the casing 12 and is movable between a closed position of the opening 14 for taking in air from outside (Figure 1) and a closed position of the opening 16 for taking in air from inside (Figure 2). Housed in the casing 12 is a fan assembly 20 comprising an electric motor 22 and a fan 24. The fan assembly 20 draws in a flow of air from outside or from inside the vehicle according to the position of the flap 18 and sends the air flow towards a treatment section designated by 26 in Figures 3 and 4.

With reference to Figures 3 and 4, the treatment section 26 comprises an evaporator 28 and a heating radiator 30. Arranged in the treatment section 26 are two mixing flaps 32, 34. Provided downstream of the treatment section 26 are two air-distribution ducts 36, 38, each of which is associated to a respective air-distribution flap 40, 42. Each air-distribution flap 40, 42 is movable between an open position and a closed position of the respective duct 36, 38.

The air-intake flap 18, the mixing flap 32, 34 and the air-distribution flap 40, 42 are associated to respective actuators (not illustrated) that act upon command of an electronic control unit.

With reference to Figures 1 and 2, the air-intake flap 18 carries a sensor 44 for detecting the quality of the air. The sensor 44 is fixed to the flap 18 and is movable with this between the closed position of the opening 14 for taking in air from outside and the closed position of the opening 16 for taking in air from inside. The sensor 44 has an active portion that is inserted in a hole 46 of the flap 18 and that gives out onto a surface of the flap 18 facing outwards in the closed position of the opening 14 for taking in air from outside.

As may be seen in Figures 1 and 2, in both positions of the flap 18 the sensor 46 is in contact with the air outside the vehicle. The sensor 46 detects the presence of pollutants in the external air and sends the corresponding information to the electronic control unit. When an amount of pollutants higher than a pre-set level is detected, the electronic control unit closes the opening 14 for taking in air from outside. Also in the closed position of the air-intake opening 14, the sensor 44 detects the quality of the air on the outside of the vehicle and can govern reopening of the air-intake opening 14 when the level of pollutants drops below the pre-set threshold.

With reference to Figures 3 and 4, the air-distribution flap 40 carries a temperature sensor 48. The temperature sensor 48 is fixed to the flap 40 and has an active portion that extends through a hole 50 of said flap. The active portion of the temperature sensor 48 emerges on a surface of the flap 40, which, in the position where the flap 40 closes the respective air-distribution duct 36, faces the treatment section 26. As may be seen in Figures 3 and 4, in any position of the flap 40 the temperature sensor 48 is able to detect the temperature of the air flow coming out of the treatment section 26. The electronic control unit governs, via respective actuators, the position of the air-distribution flaps 40, 42 and of the mixing flaps 32, 34 as a function of the signals supplied by the temperature sensor 48.

## Claims

1. An air-treatment assembly for vehicles, comprising:
- a casing (12) having an air-intake opening (14) for taking in air from outside the vehicle and an air-intake opening (16) for taking in air from inside the vehicle;
- an air-intake flap (18), which is movable with respect to the casing (12) between a closed position of the opening (14) for taking in air from outside and a closed position of the opening (16) for taking in air from inside;
- a fan assembly (20);
- at least one radiator (28, 30) for heating/cooling a flow of air;
- at least one air-distribution flap (40, 42) for opening or closing a duct (36, 38) for distribution of the air flow;
- at least one sensor (44, 48), for detecting a characteristic data of the air flow; and
- a control unit varying the position of said air-intake flap (18) and/or of said air-distribution flap (40, 42) as a function of said characteristic data of the air flow,
said air-treatment assembly being **characterized in that** said at least one sensor (44, 48) is set on said air-intake flap (18) and/or on said air-distribution flap (40, 42).

2. The air-treatment assembly according to Claim 1, **characterized in that** said sensor is a sensor for detecting the quality of the air (44) and is set on said air-intake flap (18).

3. The air-treatment assembly according to Claim 1, **characterized in that** said sensor is a temperature sensor (48) and is carried by said air-distribution flap (40).

4. The air-treatment assembly according to Claim 2, **characterized in that** said sensor for detecting the quality of the air (44) has an active portion that extends through a hole (46) of the air-intake flap (18) and that emerges on a surface of the air-intake flap (18) that faces outwards in the closed position of said opening (14) for taking in air from outside.

5. The air-treatment assembly according to Claim 3, **characterized in that** said temperature sensor (48) has an active portion that extends through a hole (50) of said air-distribution flap (40) and that emerges on a surface of the air-distribution flap (40) that, in the closed position of the respective air-distribution duct (46), faces a section (26) for treatment of the air flow (26).
